# FASCICULE DE BREVET EUROPEEN

(11) **EP 3 411 565 B1**
(45) Date de publication et mention de la délivrance du brevet: **06.11.2019**
(21) Numéro de dépôt: 17707629.6
(22) Date de dépôt: 03.02.2017
(51) Int. Cl.: F01D 25/16, B64D 29/08, F02K 1/72, F02K 1/76

(54) **ENSEMBLE PROPULSIF POUR AERONEF**
FLUGTRIEBWERK
AIRCRAFT PROPULSION ASSEMBLY

(30) Priorité: 04.02.2016 FR 1650897
(43) Date de publication de la demande: 12.12.2018
(73) Titulaire: Safran Aircraft Engines, 75015 Paris (FR); Safran Nacelles, 76700 Gonfreville-l'Orcher (FR)
(72) Inventeur: ANCUTA, Carmen, Gina, 77550 Moissy-cramayel Cedex (FR); LEMARCHAND, Kevin Morgane, 77550 Moissy-cramayel Cedex (FR); KERBLER, Olivier, 92160 Antony (FR); SERISET, Mélody, 78370 Plaisir (FR)
(74) Mandataire: Cabinet Beau de Loménie
(86) Numéro de dépôt international: PCT/FR2017/050251
(87) Numéro de publication internationale: WO 2017/134402

(56) Documents cités:
- EP-A1- 0 540 193
- FR-A1- 2 953 490
- FR-A1- 2 999 155
- US-A- 5 054 285

## Description

### Arrière-plan de l'invention

La présente invention se rapporte au domaine général des ensembles propulsifs pour aéronef comprenant un turboréacteur par exemple du type à haut taux de dilution et une nacelle au niveau de laquelle est disposé un inverseur de poussée.

Une nacelle d'un tel ensemble propulsif se présente généralement sous une forme tubulaire avec une entrée d'air en amont du turboréacteur, une section médiane entourant la soufflante du turboréacteur, et une section aval abritant l'inverseur de poussée. La section aval de la nacelle comprend en outre une paroi annulaire interne entourant une partie d'un générateur de gaz du turboréacteur et une paroi annulaire externe disposée autour de la paroi interne pour délimiter avec celle-ci une veine annulaire d'écoulement d'un flux secondaire (ou flux froid) du turboréacteur.

Généralement, les équipements du turboréacteur (tels que le calculateur embarqué, le boîtier d'accessoires, les harnais électriques, les canalisations, etc.) sont installées dans l'espace annulaire interne de la nacelle, au niveau de la zone de soufflante de celle-ci. Cependant, il est devenu de plus en plus fréquent d'installer ces équipements dans un espace inter-veines (appelé également « zone core »), c'est-à-dire principalement sous la paroi annulaire interne délimitant à l'intérieur la veine annulaire d'écoulement d'un flux secondaire circulant dans le turboréacteur. Cette disposition particulière des équipements est notamment recherchée lorsqu'il est nécessaire de réduire le maître couple - et donc la traînée - d'une telle nacelle.

Afin de permettre des visites périodiques de maintenance dans l'espace inter-veines dans lequel sont notamment installés les équipements, la paroi interne de la nacelle comprend au moins une partie apte à se déplacer entre une position de maintenance dans laquelle elle découvre au moins partiellement l'espace inter-veines, et une position de travail dans laquelle elle masque cet espace inter-veines et délimite à l'intérieur la veine d'écoulement du flux secondaire. Cette paroi interne peut ainsi comprendre deux demi-coquilles dont l'une au moins est apte à se déplacer entre la position de maintenance et la position de travail. On pourra se référer au document FR 2,999,155 qui décrit un exemple d'une telle nacelle à demi-coquilles.

Par ailleurs, pour pouvoir réaliser des opérations de maintenance dans l'espace inter-veines du turboréacteur, il est généralement nécessaire d'ouvrir ou de déplacer la paroi externe de la nacelle pour pouvoir ouvrir les demi-coquilles de la paroi interne.

Dans le cas où la paroi externe de la nacelle est une structure du type « C-duct », c'est-à-dire que cette structure est constituée de deux demi-capots montés pivotant sur des charnières en partie supérieure de la nacelle, l'accès à l'espace inter-veines du turboréacteur s'effectue par l'ouverture des demi-capots de la paroi externe puis par l'ouverture des demi-coquilles de la paroi interne.

Dans le cas où la paroi externe de la nacelle est une structure du type « O-duct », c'est-à-dire constituée d'un unique capot annulaire s'étendant d'un côté à l'autre du pylône de suspension auquel sont rapportés la nacelle et le turboréacteur, l'accès à l'espace inter-veines du turboréacteur est réalisé en translatant le capot selon un axe longitudinal sensiblement parallèle à l'axe de la nacelle puis en ouvrant les demi-coquilles de la paroi interne.

Enfin, dans le cas où la paroi externe de la nacelle est une structure du type « D-duct », c'est-à-dire constituée de deux demi-capots reliés aux demi-coquilles correspondantes de la paroi interne, l'ouverture de la paroi externe de la nacelle entraîne simultanément l'ouverture de la paroi interne afin d'accéder à l'espace inter-veines.

Quant à l'inverseur de poussée équipant de telles nacelles, il comprend généralement un élément aval de la paroi externe qui est mobile en translation entre une position rétractée dans laquelle il délimite à l'extérieur la veine d'écoulement du flux secondaire et une position d'inversion de poussée dans laquelle il autorise le déploiement d'éléments de déviation du flux secondaire (typiquement des volets) dans une direction radiale pour obstruer la veine d'écoulement du flux froid et réorienter le flux froid vers l'extérieur de la nacelle. La cinématique permettant le déploiement des éléments de déviation du flux secondaire est généralement commandée par des bielles de guidage qui sont solidaires à une extrémité des éléments de déviation et fixées à une extrémité opposée au niveau de la paroi interne de la nacelle. Un tel agencement est divulgué dans le document EP 0 540 193 A1.

Or, lorsque la paroi interne de la nacelle comporte au moins une partie mobile (par exemple des demi-coquilles) pour les opérations de maintenance et que la paroi externe est du type « O-duct » ou « C-duct », les demi-coquilles de la paroi interne ne sont pas couplées à la paroi externe. Aussi, dans ce cas, la fixation des bielles de guidage de l'inverseur de poussée sur la paroi interne de la nacelle n'est pas envisageable.

### Objet et résumé de l'invention

La présente invention a donc pour but principal de pallier de tels inconvénients en proposant une architecture d'ensemble propulsif dans laquelle la fixation des bielles de guidage de l'inverseur de poussée permet de conserver la décorrélation entre la paroi interne et la paroi externe de la nacelle.

Conformément à l'invention, ce but est atteint grâce à un ensemble propulsif pour aéronef, comprenant :
un turboréacteur à double flux comprenant un espace inter-veines séparant une veine d'écoulement d'un flux primaire et une veine d'écoulement d'un flux secondaire, et un carter inter-compresseur fixe et positionné en amont dudit espace inter-veines ;
une nacelle disposée autour du turboréacteur et comprenant, à l'aval, une paroi annulaire interne qui délimite à l'extérieur l'espace inter-veines et à l'intérieur la veine d'écoulement du flux secondaire et une paroi annulaire externe disposée autour de la paroi interne et qui délimite à l'extérieur la veine d'écoulement du flux secondaire, au moins une partie de la paroi interne étant apte à se déplacer entre une position de maintenance dans laquelle elle découvre au moins partiellement l'espace inter-veines et une position de travail dans laquelle elle masque l'espace inter-veines ; et
un inverseur de poussée comprenant un élément aval de la paroi externe qui est mobile en translation entre une position rétractée dans laquelle il délimite à l'extérieur la veine d'écoulement du flux secondaire et une position d'inversion de poussée dans laquelle des éléments de déviation du flux secondaire sont déployés dans une direction radiale, le déploiement desdits éléments de déviation du flux secondaire étant commandé par des bielles de guidage dont une première extrémité est fixée par une première liaison articulée sur les éléments de déviation et une seconde extrémité est fixée par une seconde liaison articulée sur le carter inter-compresseur du turboréacteur.

L'ensemble propulsif selon l'invention est remarquable notamment en ce que les bielles de guidage de l'inverseur de poussée sont fixées, au niveau de leur extrémité opposée aux éléments de déviation du flux secondaire, au carter inter-compresseur du turboréacteur. Une telle fixation permet ainsi de conserver une décorrélation entre la paroi interne et la paroi externe de la nacelle (la paroi interne et la paroi externe peuvent se déplacer indépendamment l'une de l'autre). Une telle fixation présente un faible impact sur l'installation existante des équipements dans l'espace inter-veines. De plus, elle permet d'utiliser une structure existante (le carter inter-compresseur) pour le passage des efforts des bielles de guidage sans ajouter de masse supplémentaire. Enfin, elle permet de réduire les bossages au niveau de l'intégration entre les bielles de guidage et le carter inter-compresseur, ce qui permet de limiter l'impact sur les lignes aérodynamiques dans le flux secondaire.

Les éléments de déviation du flux secondaire peuvent être des volets solidaires de l'élément aval de la paroi externe de la nacelle qui sont aptes, en position d'inversion de poussée de l'inverseur de poussée, à obturer au moins en partie la veine d'écoulement du flux secondaire.

De préférence, le turboréacteur comprend en outre un carter moteur fixe positionné en amont du carter inter-compresseur.

La paroi interne de la nacelle peut comporter deux demi-coquilles dont l'une au moins est apte à se déplacer entre la position de maintenance et la position de travail. Dans ce cas, l'ensemble propulsif comporte de préférence en outre des moyens de déplacement de la demi-coquille de la paroi interne de la nacelle entre sa position de maintenance et sa position de travail, lesdits moyens de déplacement comprenant un système à rail et glissière et à bielle de guidage.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1 et 2 sont des demi-vues en coupe longitudinale d'un ensemble propulsif selon l'invention dans deux configurations différentes ;
- la figure 3 est une loupe de la figure 1 montrant en détails un exemple de réalisation de l'inverseur de poussée de l'ensemble propulsif ; et
- les figures 4 et 5 sont des vues en perspective de l'ensemble propulsif dans différentes configurations.

### Description détaillée de l'invention

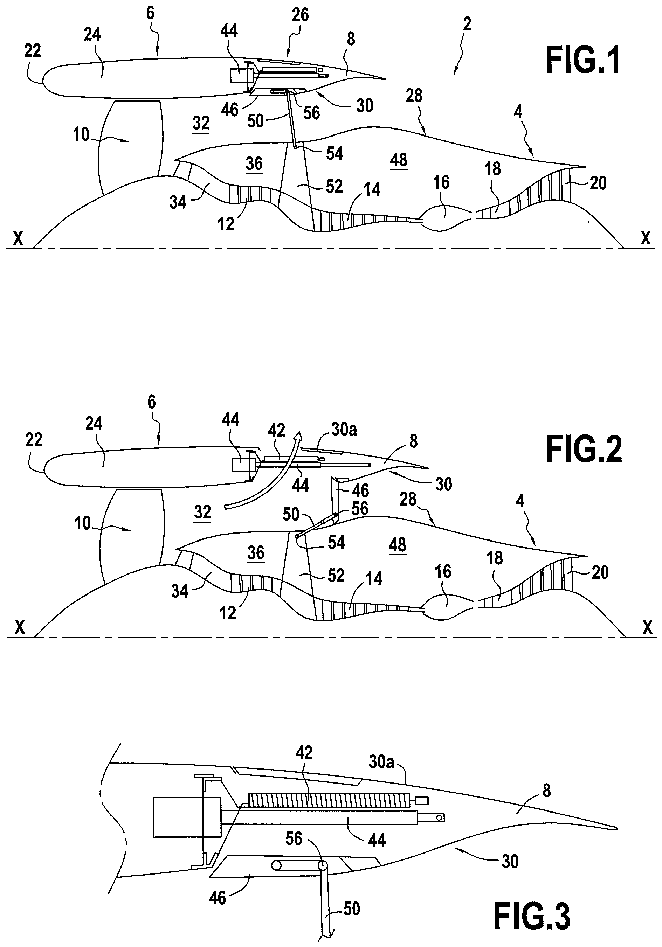

Les figures 1 et 2 représentent de façon schématique en demi-coupe longitudinale un ensemble propulsif 2 selon un exemple de réalisation de l'invention.

Cet ensemble propulsif 2 comprend notamment un turboréacteur 4 du type à double corps et à double flux, une nacelle 6 centrée sur un axe longitudinal X-X du turboréacteur 4 et disposée autour celui-ci, et un inverseur de poussée 8 disposée au niveau de la nacelle.

De façon connue, le turboréacteur 4 comprend, d'amont en aval, une soufflante 10, un compresseur basse-pression 12, un compresseur haute-pression 14, une chambre de combustion 16, une turbine haute-pression 18 et une turbine basse-pression 20.

Le turboréacteur 4 comprend en outre un espace inter-veines 48 (également appelé « zone core ») qui sépare radialement une veine d'écoulement d'un flux secondaire 32 et une veine d'écoulement d'un flux primaire 34. La veine d'écoulement du flux secondaire 32 étant positionnée radialement vers l'extérieur par rapport à la veine d'écoulement du flux primaire 34.

Quant à la nacelle 6, elle se présente sous une forme tubulaire avec une entrée d'air 22 en amont du turboréacteur 4, une section médiane 24 entourant la soufflante 10 du turboréacteur, et une section aval 26 abritant l'inverseur de poussée 8.

Plus précisément, la section aval 26 de la nacelle comprend une paroi annulaire interne 28 (appelée IFS pour « Inner Fixed Structure ») qui délimite à l'extérieur l'espace inter-veines 48 dans lequel est logée une partie du générateur de gaz du turboréacteur (i.e. les éléments identifiés ci-dessus, hors la soufflante) et une paroi annulaire externe 30 (appelée OFS pour « Outer Fixed Structure ») qui est disposée autour de la paroi annulaire interne 28 en lui étant concentrique et qui délimite à l'extérieur la veine d'écoulement du flux secondaire 32.

De façon connue en soi, cette veine d'écoulement du flux froid est disposée autour d'une veine d'écoulement du flux chaud (ou flux primaire) 34 circulant dans le turboréacteur en lui étant concentrique.

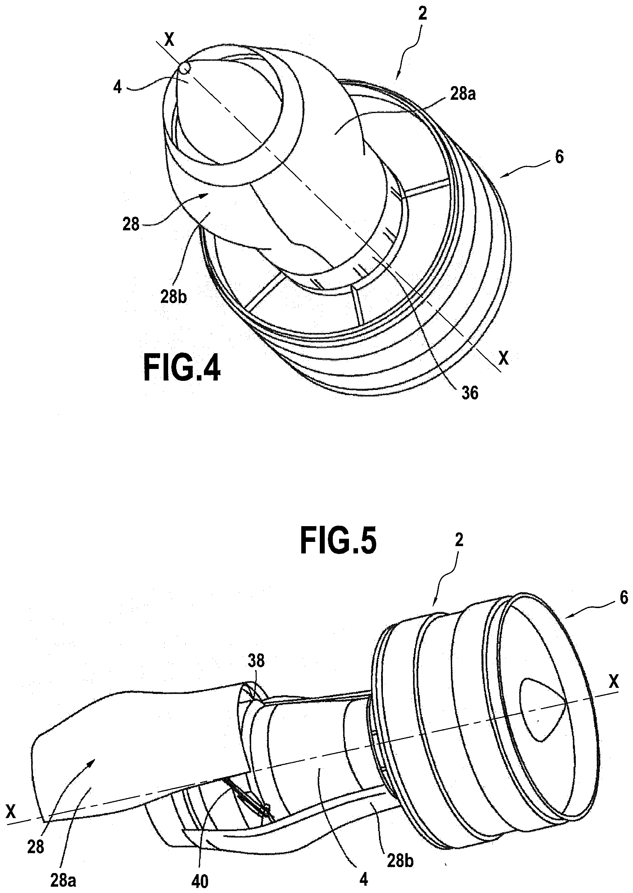

La paroi annulaire interne 28 comporte au moins une partie mobile entre une position de maintenance (figure 5) dans laquelle elle découvre au moins partiellement l'espace inter-veines 48 et une position de travail (figure 4) dans laquelle elle masque ledit espace inter-veines.

Comme représenté de façon plus précise sur les figures 4 et 5, la paroi interne 28 de la nacelle 6 comporte de préférence deux demi-coquilles 28a, 28b de forme hémicylindrique qui sont disposées de part et d'autre d'un plan vertical longitudinal de symétrie de la nacelle. Ces demi-coquilles 28a, 28b sont aptes à se déplacer entre la position de travail (figure 4) dans laquelle elles délimitent à l'intérieur la veine d'écoulement du flux secondaire 32 et une position de maintenance (figure 5). Dans cet espace inter-veines 48, peuvent notamment être positionnés certains équipements du turboréacteur (non représentés sur les figures), tels que par exemple un calculateur embarqué, le boîtier d'accessoires, des harnais électrique, des canalisations, etc.

En position de travail, la paroi interne 28 de la nacelle est fixée en amont sur le carter inter-compresseur 52 qui est solidaire du turboréacteur. Dans cette position, les deux demi-coquilles 28a, 28b de kla paroi interne sont maintenues en position de fermeture par un système classique de verrouillage connu de l'homme du métier.

Le passage en position de maintenance des demi-coquilles 28a, 28b s'effectue par tout système connu de l'homme du métier. A titre d'exemple, on pourra utiliser un système à rail et glissière 38 et à bielle de guidage 40 tel que celui décrit dans la publication FR 2,999,155 à laquelle on pourra se référer pour plus de détails.

On notera que la paroi externe 30 de la nacelle peut ici être du type « C-duct » (c'est-à-dire constituée de deux demi-capots montés pivotant sur la nacelle 6), « O-duct » (c'est-à-dire constituée d'un unique capot annulaire translatable) ou « D-duct » (c'est-à-dire constituée de deux demi-capots reliés aux demi-coquilles correspondantes de la paroi interne).

L'ensemble propulsif 2 selon l'invention comprend également un inverseur de poussée 8 qui est intégré à la nacelle. Différents types d'inverseur de poussée peuvent être envisagés. Dans l'exemple décrit ci-après, il s'agit d'un inverseur de poussée du type à grilles.

De façon connue, il comprend un élément aval 30a de la paroi externe 30 de la nacelle 6 qui est mobile en translation entre une position rétractée (figures 1 et 3) dans laquelle il délimite à l'extérieur la veine d'écoulement du flux secondaire 32, et une position d'inversion de poussée décalée vers l'aval (figure 2) dans laquelle il découvre des grilles 42 d'inversion de poussée logées dans la nacelle.

De préférence, l'élément aval 30a de la paroi externe 30 de la nacelle est mis en mouvement par l'intermédiaire de vérins 44 fixés sur la nacelle au niveau de la section médiane 24 de celle-ci.

Par ailleurs, le déplacement vers l'aval de cet élément aval 30a de la paroi externe entraîne le déploiement d'éléments de déviation du flux secondaire dans une direction radiale. Dans l'exemple représenté sur les figures 1 à 3, ces éléments de déviation sont une pluralité de volets 46 basculant radialement dans la veine d'écoulement du flux secondaire 32 pour l'obstruer au moins en partie. Ainsi, dans cette position, le flux secondaire s'écoulant dans cette veine 32 est dévié radialement en direction des grilles 42 qu'il traverse vers l'extérieur avec une composante vers l'amont pour fournir une poussée inverse à l'aéronef.

Les volets 46 de déviation du flux secondaire sont guidés chacun par une bielle de guidage 50 dont une première extrémité est fixée par une première liaison articulée 56 sur les volets 46 et une seconde extrémité est fixée par une seconde liaison articulée 54 sur le carter inter-compresseur 52 du turboréacteur.

Le carter inter-compresseur 52 du turboréacteur est un carter structural disposé entre le compresseur basse-pression 12 et le compresseur haute-pression 14 du turboréacteur (entre un carter moteur 36 fixe en amont et les demi-coquilles 28a, 28b de la paroi interne de la nacelle en aval). Typiquement, ce carter inter-compresseur 52 permet notamment le passage radial d'arbres d'entraînement d'accessoires. Il permet également de reconstituer la veine aérodynamique entre le compresseur basse-pression et le compresseur haute-pression, d'assurer une reprise d'un certain nombre d'efforts (de paliers et des efforts de poussées), d'assurer le passage de servitudes, d'assurer la fonction de vannes de décharge, d'assurer la fixation de certaines viroles permettant de reconstituer la veine d'écoulement du flux secondaire, etc.

La liaison articulée 54 permet à chaque bielle de guidage 50 de pivoter autour de cette liaison lors du basculement des volets 46 de déviation du flux secondaire.

Le carter moteur 36 est relié au carter inter-compresseur 52 par des carénages aérodynamiques dont au moins un peut être amovible de façon à permettre ainsi un accès à la partie aval du turboréacteur 4 lors des opérations de maintenance tout en maintenant une continuité aérodynamique de la veine d'écoulement du flux secondaire 32 lors du fonctionnement du turboréacteur 4.

## Revendications

1. Ensemble propulsif (2) pour aéronef, comprenant :
un turboréacteur (4) à double flux comprenant un espace inter-veines (48) séparant une veine d'écoulement d'un flux primaire (34) et une veine d'écoulement d'un flux secondaire (32), et un carter inter-compresseur (52) fixe et positionné en amont dudit espace inter-veines (48) ;
une nacelle (6) disposée autour du turboréacteur et comprenant, à l'aval, une paroi annulaire interne (28) qui délimite à l'extérieur l'espace inter-veines et à l'intérieur la veine d'écoulement du flux secondaire et une paroi annulaire externe (30) disposée autour de la paroi interne et qui délimite à l'extérieur la veine d'écoulement du flux secondaire, au moins une partie de la paroi interne étant apte à se déplacer entre une position de maintenance dans laquelle elle découvre au moins partiellement l'espace inter-veines et une position de travail dans laquelle elle masque l'espace inter-veines ; et
un inverseur de poussée (8) comprenant un élément aval (30a) de la paroi externe qui est mobile en translation entre une position rétractée dans laquelle il délimite à l'extérieur la veine d'écoulement du flux secondaire et une position d'inversion de poussée dans laquelle des éléments de déviation (46) du flux secondaire sont déployés dans une direction radiale;
**caractérisé en ce que** le déploiement desdits éléments de déviation du flux secondaire est commandé par des bielles de guidage (50) dont une première extrémité est fixée par une première liaison articulée (56) sur les éléments de déviation et une seconde extrémité est fixée par une seconde liaison articulée (54) sur le carter inter-compresseur (52) du turboréacteur.

2. Ensemble propulsif selon la revendication 1, dans lequel les éléments de déviation du flux secondaire sont des volets (46) solidaires de l'élément aval de la paroi externe de la nacelle qui sont aptes, en position d'inversion de poussée de l'inverseur de poussée, à obturer au moins en partie la veine d'écoulement du flux secondaire.

3. Ensemble propulsif selon l'une des revendications 1 et 2, dans lequel le turboréacteur (4) comprend en outre un carter moteur (36) fixe positionné en amont du carter inter-compresseur (52).

4. Ensemble propulsif selon l'une quelconque des revendications 1 à 3, dans lequel la paroi interne (28) de la nacelle comporte deux demi-coquilles (28a, 28b) dont l'une au moins est apte à se déplacer entre la position de maintenance et la position de travail.

5. Ensemble propulsif selon la revendication 4, comportant en outre des moyens de déplacement de la demi-coquille de la paroi interne (28) de la nacelle (6) entre sa position de maintenance et sa position de travail, lesdits moyens de déplacement comprenant un système à rail et glissière (38) et à bielle de guidage (40).

## Patentansprüche

1. Antriebseinheit (2) für ein Luftfahrzeug, umfassend
ein Zweistrom-Turbostrahltriebwerk (4) mit einem Zwischenkanalraum (48), der einen Strömungskanal eines Primärstroms (34) und einen Strömungskanal eines Sekundärstroms (32) trennt, und einem Zwischenverdichtergehäuse (32), das fest ist und stromaufwärts des Zwischenkanalraums (48) positioniert ist,
eine Gondel (6), die um das Turbostrahltriebwerk herum angeordnet ist und stromabwärts eine ringförmige Innenwand (28), die außen den Zwischenkanalraum und innen den Strömungskanal des Sekundärstroms begrenzt, sowie eine ringförmige Außenwand (30) umfasst, die um die Innenwand herum angeordnet ist und die außen den Strömungskanal des Sekundärstroms begrenzt, wobei wenigstens ein Teil der Innenwand geeignet ist, sich zwischen einer Wartungsposition, in der sie den Zwischenkanalraum wenigstens teilweise bedeckt, und einer Arbeitsposition, in der sie den Zwischenkanalraum bedeckt, zu bewegen, und
eine Schubumkehrvorrichtung (8), die ein stromabwärtiges Element (30a) der Außenwand umfasst, das zwischen einer eingefahrenen Position, in der es außen den Strömungskanal des Sekundärstroms begrenzt, und einer Schubumkehrposition, in der Elemente zum Ablenken (46) des Sekundärstroms in einer radialen Richtung ausgefahren werden, verschiebebeweglich ist,
**dadurch gekennzeichnet, dass** das Ausfahren der Elemente zum Ablenken des Sekundärstroms durch Führungsstangen (50) gesteuert wird, von denen ein erstes Ende durch eine erste Gelenkverbindung (56) an den Ablenkelementen befestigt ist und ein zweites Ende durch eine zweite Gelenkverbindung (54) an dem Zwischenverdichtergehäuse (52) des Turbostrahltriebwerks befestigt ist.

2. Antriebseinheit nach Anspruch 1, bei der die Elemente zum Ablenken des Sekundärstroms Klappen (46) sind, die mit dem stromabwärtigen Element der Außenwand der Gondel fest verbunden sind und die in der Schubumkehrposition der Schubumkehrvorrichtung, geeignet sind, den Strömungskanal des Sekundärstroms wenigstens teilweise zu verschließen.

3. Antriebseinheit nach einem der Ansprüche 1 und 2, bei der das Turbostrahltriebwerk (4) ferner ein festes Triebwerkgehäuse (36) aufweist, das stromaufwärts des Zwischenverdichtergehäuses (52) positioniert ist.

4. Antriebseinheit nach einem der Ansprüche 1 bis 3, bei der die Innenwand (28) der Gondel zwei Halbschalen (28a, 28b) umfasst, von denen wenigstens die eine geeignet ist, sich zwischen der Wartungsposition und der Arbeitsposition zu bewegen.

5. Antriebseinheit nach Anspruch 4, ferner umfassend Mittel zum Bewegen der Halbschale der Innenwand (28) der Gondel (6) zwischen ihrer Wartungsposition und ihrer Arbeitsposition, wobei die Bewegungsmittel ein System mit Schiene und Gleitbahn (38) und mit Führungsstange (40) umfassen.

## Claims

1. An aircraft propulsion assembly (2) comprising:
a bypass turbojet (4) having a space (48) between passages separating a core stream flow passage (34) and a bypass stream flow passage (32), and a stationary inter-compressor casing (52) positioned upstream from said space (48) between passages;
a nacelle (6) arranged around the turbojet and including at its downstream end an inner annular wall (28) that defines the outside of the space between passages and the inside of the bypass stream flow passage, and an outer annular wall (30) arranged around the inner wall and that defines the outside of the bypass stream flow passage, at least a portion of the inner wall being suitable for moving between a maintenance position in which it uncovers the space between passages at least in part and a working position in which it masks the space between passages; and
a thrust-reverser (8) comprising a downstream element (30a) of the outer wall that is movable in translation between a retracted position in which it defines the outside of the bypass stream flow passage and a thrust-reversal position in which bypass stream deflector elements (46) are deployed in a radial direction, the deployment of said bypass stream deflector elements being controlled by guide rods (50), each having a first end fastened via a first hinged connection (56) to a deflector element and a second end fastened via a second hinged connection (54) to the inter-compressor casing (52) of the turbojet.

2. A propulsion assembly according to claim 1, wherein the bypass stream deflector elements are flaps (46) secured to the downstream element of the outer wall of the nacelle and suitable, in the thrust-reversal position of the thrust-reverser, for partially obstructing the bypass stream flow passage.

3. A propulsion assembly according to claim 1 or claim 2, wherein the turbojet (4) further comprises a stationary engine casing (46) located upstream from the inter-compressor casing (52).

4. A propulsion assembly according to any one of claims 1 to 3, wherein the inner wall (28) of the nacelle has two half-shells (28a, 28b), at least one of which is for moving between the maintenance position and the working position.

5. A propulsion assembly according to claim 4, further comprising movement means for moving the half-shell of the inner wall (28) of the nacelle (6) between its maintenance position and its working position, said movement means comprising a guide rod (40) and a rail- and-slideway (38) system.
